## Europäisches Patentamt
## European Patent Office
## Office européen des brevets

(19)

(11) Numéro de publication: **0 246 160**
**B1**

(12)

# FASCICULE DE BREVET EUROPEEN

(45) Date de publication du fascicule du brevet:
**01.08.90**

(21) Numéro de dépôt: **87401090.3**

(22) Date de dépôt: **14.05.87**

(51) Int. Cl.⁵: **B01J 35/10**, B01J 23/88,
C10G 45/16

(54) **Procédé d'hydrotraitement catalytique d'hydrocarbures.**

(30) Priorité: **14.05.86 FR 8606918**

(43) Date de publication de la demande:
**19.11.87 Bulletin 87/47**

(45) Mention de la délivrance du brevet:
**01.08.90 Bulletin 90/31**

(84) Etats contractants désignés:
**BE DE GB IT NL**

(56) Documents cités:
**EP-A- 0 048 670**
**FR-A- 2 202 931**
**FR-A- 2 356 931**
**FR-A- 2 560 789**

(73) Titulaire: **COMPAGNIE DE RAFFINAGE ET DE DISTRIBUTION TOTAL FRANCE, 84, rue de Villiers, F-92300 Levallois Perret(FR)**

(72) Inventeur: **Devanneaux, Jacques, 5. rue du Dauphiné, F-79290 Montivilliers(FR)**
Inventeur: **Gallez, Jean-Paul, Sente aux Prêtres - Parc d'Anxtot, F-76210 Bolbec(FR)**
Inventeur: **Mariette, Laurent, Route de Saint-Etienne La Thillaye, F-14800 Saint-Arnoult(FR)**

(74) Mandataire: **Jolly, Jean-Pierre et al, Cabinet BROT et JOLLY 83, rue d'Amsterdam, F-75008 Paris(FR)**

ACTORUM AG

## Description

La présente invention concerne un procédé d'hydrotraitement d'hydrocarbures, appartenant au groupe constitué par les paraffines, les distillats obtenus lors de la distillation sous pression réduite du pétrole brut et les huiles lubrifiantes usées ayant subi un traitement de clarification-démétallisation.

Dans la demande de brevet français No 2 560 789, la Demanderesse a décrit des catalyseurs d'hydrotraitement d'hydrocarbures comprenant:

a) un support en oxyde minéral réfractaire,

b) sous forme libre ou combinée, de 0,5 à 30% en poids, rapporté au poids total du catalyseur, de molybdène,

c) sous forme libre ou combinée, de 0,5 à 10% en poids, rapporté au poids total du catalyseur, d'au moins un métal choisi dans le groupe constitué par le nickel et le cobalt, le volume poreux de ces catalyseurs étant supérieur à 0,70 cm³ par gramme et le volume poreux constitué par les pores de rayon supérieur à 300 Ångströms ($10^{-10}$m) ayant une valeur maximum de 0,20 cm³ par gramme.

Plus particulièrement, dans ces catalyseurs, les raies du spectre obtenu en les étudiant par microsonde RAMAN et de fréquences allant de 900 à 1020 cm$^{-1}$, ont la distribution suivante:

– 40% au plus ont une fréquence comprise entre 900 et 930 cm$^{-1}$,

– au moins 40% ont une fréquence comprise entre 930 et 955 cm$^{-1}$,

– 30% au plus ont une fréquence comprise entre 955 et 1020 cm$^{-1}$.

Ces catalyseurs sont particulièrement adaptés pour la désulfuration de charges d'hydrocarbures.

En poursuivant ses travaux, la Demanderesse a maintenant établi que certains catalyseurs de la même famille, mais possédant un spectre RAMAN différent, possèdent des propriétés non décrites et non revendiquées dans la demande précitée.

Le but de la présente invention est donc la mise au point d'un procédé d'hydrotraitement d'hydrocarbures particuliers, nécessitant que le catalyseur ait particulièrement une fonction hydrogénante, comme c'est le cas, par exemple, pour l'hydrotraitement des paraffines et des cires.

A cet effet, l'invention a pour objet un procédé d'hydrotraitement catalytique d'hydrocarbures appartenant au groupe constitué par les paraffines, les distillats obtenus lors de la distillation sous pression réduite du pétrole brut et les huiles lubrifiantes usées ayant subi un traitement de clarification-démétallisation, ce procédé consistant à faire réagir lesdits hydrocarbures avec de l'hydrogène en présence d'un catalyseur, à une température comprise entre 300 et 450°C, sous une pression comprise entre 25 et 250 bar, avec un rapport volumique hydrogène/hydrocarbutres compris entre 50 et 3000 normaux-litres/litre et avec une vitesse volumique horaire de la charge mesurée à l'état liquide comprise entre 0,1 et 5 v/v/h (volume de liquide passant par heure sur une unité de volume de catalyseur), le catalyseur comprenant:

a) un support en alumine pouvant contenir jusqu'à 10% en poids de silice;

b) sous forme libre ou combinée, de 0,5 à 30% en poids rapporté au poids total du catalyseur, de molybdène;

c) sous forme libre ou combinée, de 0,5 à 10% en poids, rapporté au poids total du catalyseur, de nickel, ce catalyseur possédant en outre:

– une surface spécifique comprise entre 100 et 350 m²/g et, de préférence, comprise entre 200 et 320 m²/g,

– un volume poreux compris entre 0,6 et 2 cm³/g et, de préférence, compris entre 0,7 et 1,2 cm³/g, le volume poreux constitué par les pores de rayon supérieur à 300 Ångströms ($10^{-10}$m) ayant une valeur maximum de 0,20 cm³ par gramme,

– un mode de distribution des rayons de pore (c'est-à-dire le point maximum de la courbe de distribution des rayons de pore) compris entre 30 et $70.10^{-8}$ cm,

– une distribution du volume poreux telle que le catalyseur possède:

* au plus 70% de son volume poreux constitué par des pores de rayons compris entre 0 et $100.10^{-8}$ cm,

* au plus 35% de son volume poreux constitué par des pores de rayon compris entre 100 et $1000.1^{-8}$ cm,

* au plus 15% de son volume poreux constitué par des pores de rayon supérieur à $1000.10^{-8}$ cm,

* une densité apparente au plus égale à 0,65 g/cm³, ce procédé étant caractérisé en ce que le catalyseur utilisé, étudié par microsonde RAMAN, présente un spectre constitué par des raies ayant, pour les fréquences comprises entre 900 et 1020 cm$^{-1}$, la distribution suivante:

* 40% au plus ont une fréquence comprise entre 900 et 930 cm$^{-1}$,

* 30% au moins ont une fréquence comprise entre 930 et 955 cm$^{-1}$,

* 40% au plus ont une fréquence comprise entre 955 et 1020 cm$^{-1}$.

Il est précisé que, dans cet objet de l'invention et dans la suite de la présente description, le mot fréquence est employé à la place de nombre d'onde. C'est en effet l'usage chez les spécialistes en spectroscopie RAMAN (voir par exemple l'article de J.M. STENCEL et al. paru dans the Journal of Catalysis – V. 90 – pages 314–322–1984).

En fait, la fréquence $v$ est liée au nombre d'onde $V$ par la relation $v = c V$, c étant la vitesse de la lumière.

Il est également précisé que la surface spécifique est mesurée par adsorption d'azote (méthode BET).

Les volumes poreux sont mesurés par la méthode BET pour les pores de rayon inférieur à $100.10^{-8}$ cm et au porosimètre à mercure pour les pores de rayon supérieur à $100.10^{-8}$ cm.

FR-A 2 202 931 décrit des catalyseurs dont certains, dans les exemples, présentent des caractéristiques de porosité se rapprochant de celles des catalyseurs utilisés dans le procédé conforme à la présente invention. Les catalyseurs de FR-A 2 202 931 ne présentent toutefois pas les caractéristiques du spectre par microsonde RAMAN de ceux de la présente invention et ils sont destinés à l'hydrodésulfuration d'huiles résiduelles.

Le support d'alumine peut être préparé en mélangeant par malaxage de l'eau et de la poudre d'alumine précipitée et séchée par atomisation. Le mélange est ensuite extrudé dans une extrudeuse. Les extrudés obtenus sont séchés à 120°C environ, puis calcinés à une température comprise entre 500 et 750°C.

Les catalyseurs contiennent de 0,5 à 30% et, de préférence, de 10 à 25% en poids de molybdène et de 0,5 à 10% et, de préférence, de 2,5 à 8% en poids de nickel.

Ces catalyseurs peuvent être préparés par une imprégnation du support par au moins une solution contenant au moins un élément choisi dans le groupe constitué par le molybdène et le nickel, ladite imprégnation étant suivie d'une calcination à une température comprise entre 300 et 700°C et, de préférence, entre 450 et 600°C.

Les catalyseurs utilisés dans le procédé selon l'invention sont caractérisés en ce que le spectre obtenu en étudiant lesdits catalyseurs par microsonde RAMAN est constitué par des raies ayant, pour les fréquences comprises entre 900 et 1020 cm-1, la distribution suivante:
 – 40% au plus ont une fréquence comprise entre 900 et 930 cm$^{-1}$,
 – 30% au moins ont une fréquence comprise entre 930 et 955 cm$^{-1}$,
 – 40% au plus ont une fréquence comprise entre 955 et 1020 cm$^{-1}$.

Cette définition du spectre RAMAN du catalyseur décrit en fait un pic fin dans la zone de fréquence comprise entre 900 et 1020 cm$^{-1}$ et qui correspond aux atomes de molybdène.

On peut se reporter, pour avoir une description de la technique de microsonde RAMAN, au brevet français No 2 356 931.

La Demanderesse a établi qu'un catalyseur présentant les caractéristiques de volume poreux et de spectre RAMAN indiquées est un catalyseur présentant un pouvoir hydrogénant élevé et qu'il peut être utilisé pour l'hydrotraitement de charges d'hydrocarbures provenant de la distillation du pétrole brut, en vue d'hydrogéner ces charges.

L'opération d'hydrotraitement s'effectue dans les conditions suivantes:
 * température comprise entre 300 et 450°C,
 * pression comprise entre 25 et 250 bar,
 * rapport volumique hydrogène/hydrocarbures compris entre 50 et 3000 normaux litres/litre,
 * vitesse volumique horaire de la charge, mesurée à l'état liquide, de préférence comprise entre 0,1 et 5 (la vitesse volumique horaire étant le volume de liquide passant par heure sur une unité de volume de catalyseur).

Le procédé d'hydrotraitement selon l'invention peut être appliqué aux paraffines, aux distillats obtenus lors de la distillation sous pression réduite du pétrole brut et aux huiles lubrifiantes usagées. Les exemples qui suivent concernent ce type d'hydrotraitement.

Préalablement aux opérations d'hydrotraitement des charges d'hydrocarbures, il peut être avantageux de présulfurer le catalyseur en présence d'hydrogène, par des procédés connus; en général, on monte la température jusqu'à environ 350 à 400°C, en faisant passer sur le catalyseur des composés susceptibles de libérer du soufre, tels que des mélanges d'hydrogène et de sulfure d'hydrogène, des mercaptans ou du sulfure de carbone, ou même un gazole contenant du soufre.

Le procédé selon l'invention peut être également utilisé pour l'hydrotraitement d'huiles lubrifiantes usagées, après clarification-démétallisation au moyen d'une des techniques actuellement mises en œuvre chez certains re-raffineurs: floculation-filtration au phosphate d'ammonium, décontamination au propane, distillation sous vide à court trajet, ou encore ultrafiltration sur barrière minérale, telle que mise en œuvre dans le procédé dit REGELUB, mis au point par la Demanderesse.

Dans cette mise en œuvre du procédé selon l'invention, la charge de l'hydrotraitement est une base lubrifiante, ou un mélange de bases, contaminée par des produits de dégradation de la base, des fragments résiduels d'additifs et certains contaminants extérieurs.

Les produits de dégradation sont essentiellement des produits d'oxydation de la base et des produits insaturés et de masse molaire élevée résultant d'une dégradation thermique. Ils sont responsables de la couleur très foncée de l'huile et de son acidité, même après clarification selon une des techniques énoncées ci-dessus.

Les fragments résiduels d'additifs augmentent les teneurs en certains hétéroéléments, essentiellement soufre et azote.

Parmi les contaminants extérieurs, les plus remarquables sont les polychlorobiphényles (PCB), aromatiques chlorés venant par exemple de transformateurs électriques hors d'usage, et qui présentent une grande toxicité.

L'hydrotraitement de telles bases lubrifiantes sur le catalyseur selon l'invention amène une destruction très poussée de tous ces contaminants et, par là même, confère à la base des caractéristiques très proches de celles mesurées sur les bases minérales vierges.

Les exemples qui suivent sont destinés à illustrer l'invention. Ils n'ont pas de caractère limitatif.

Les figures des dessins annexés seront décrites dans le cadre de ces exemples.

## EXEMPLE 1

Cet exemple concerne la préparation d'un catalyseur A utilisable dans le procédé selon l'invention.

On part d'une alumine commercialisée par la Société AMERICAN CYANAMID sous la référence 5960.

On imprègne cette alumine avec une solution aqueuse d'heptamolybdate d'ammonium et de nitrate de nickel, cette solution étant en concentration telle que le catalyseur final contienne 17% en poids d'oxyde de molybdène $Mo\,O_3$ et 4,7% d'oxyde de nickel $Ni\,O$. On sèche le produit obtenu 16 heures à 120°C et on le calcine à l'air 2 heures à 500°C.

On obtient ainsi le catalyseur A selon l'invention, ayant la composition et les caractéristiques suivantes:

– $Al_2\,O_3$ (% en poids): 74,8
– $Mo\,O_3$ (% en poids): 17
– $Ni\,O$　(% en poids): 4,7
– $Si\,O_2$ (% en poids): 3,5
– densité apparente: 0,55 g/cm$^3$
– surface spécifique en m$^2$/g
 (mesurée à l'azote: BET): 280
– volume poreux total en cm$^3$/g: 0,80
– mode de distribution en $10^{-8}$ cm: 40
– distribution des rayons de pore:
* $0{-}15.10^{-8}$ cm: 0,145 cm$^3$/g, soit: 18,1%
* $15{-}25.10^{-8}$ cm: 0,070 cm$^3$/g, soit: 8,8%
* $25{-}50.10^{-8}$ cm: 0,160 cm$^3$/g, soit: 20%
* $50{-}100.10^{-8}$ cm: 0,120 cm$^3$/g, soit: 15%
* $0{-}100.10^{-8}$ cm: 0,495 cm$^3$/g, soit: 61,9%
* $100{-}300.10^{-8}$ cm: 0,125 cm$^3$/g, soit: 15,6%
* $> 300.10^{-8}$ cm: 0,180 cm$^3$/g, soit: 22,5%
* $100{-}1000.10^{-8}$ cm: 0,205 cm$^3$/g, soit: 25,6%
* $> 1000.10^{-8}$ cm: 0,100 cm$^3$/g, soit: 12,5%.

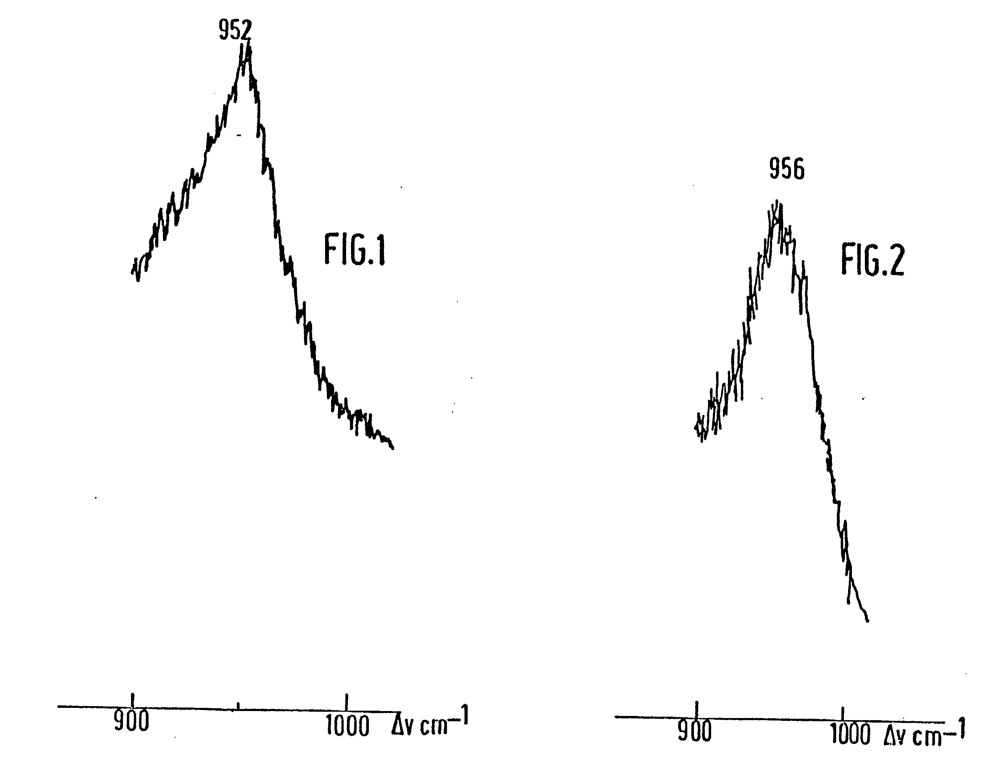

Ce catalyseur a été étudié à l'aide d'une microsonde RAMAN. Le spectre de ce catalyseur, limité à la zone de fréquence 900–1020 cm$^{-1}$, est représenté sur la figure 1.

A partir de ce spectre, on peut calculer la répartition des fréquences des raies qui est donnée dans le Tableau 1 ci-après.

| TABLEAU I | | |
|:---:|:---:|:---:|
| % des fréquences | | |
| 900–930 cm$^{-1}$ | 930–955 cm$^{-1}$ | 955–1020 cm$^{-1}$ |
| 30 | 32 | 38 |

## EXEMPLE 2

Cet exemple concerne l'hydrotraitement d'une charge de paraffine brute obtenue de façon classique dans le raffinage du pétrole brut.

Cet hydrotraitement est destiné à décolorer, désulfurer et éliminer les hydrocarbures aromatiques, de façon à obtenir des paraffines de bonne qualité, notamment de qualité alimentaire.

On a utilisé pour cet hydrotraitement, d'une part, le catalyseur A dans l'Exemple 1, d'autre part, un catalyseur commercial témoin T1, considéré comme un bon catalyseur pour ce genre de traitement.

Le catalyseur commercial témoin T1 est composé d'une alumine sur laquelle ont été déposés du nickel et du molybdène.

Le spectre de ce catalyseur obtenu par microsonde RAMAN est donné en figure 2.

La répartition des raies est donnée dans le Tableau II ci-après.

| TABLEAU II | | |
|---|---|---|
| % des fréquences | | |
| 900–930 cm$^{-1}$ | 930–955 cm$^{-1}$ | 955–1020 cm$^{-1}$ |
| 22 | 34 | 44 |

Les essais sont effectués de la façon suivante: on utilise une unité pilote sans recycle de gaz (dite à hydrogène perdu), dans laquelle la charge et l'hydrogène circulent de façon descendante. Le réacteur contient 200 cm³ de catalyseur.

Avant le test proprement dit, on présulfure le catalyseur avec du diméthyldisulfure.

Cette présulfuration est effectuée sous une pression d'hydrogène de 30 bar, à une vitesse spatiale horaire de 3 et un taux d'hydrogène/charge de 150 normaux-litres/litre. On augmente progressivement la température de façon à atteindre la température de 320°C à laquelle sont effectués les essais.

Les essais sont effectués avec un rapport hydrogène/charge de 100 normaux-litres/litre.

On a effectué des essais à différentes pressions et vitesses volumique horaires.

On mesure différentes caractéristiques de la charge et des effluents liquides.

Les résultats figurent dans le Tableau III ci-après.

TABLEAU III

| Caractéristiques | | Charge | Effluents des essais effectués avec le Catalyseur témoin T1 | | | Effluents des essais effectués avec le Catalyseur A | | |
|---|---|---|---|---|---|---|---|---|
| | | | à 60 bar et VVH=1,5 | à 80 bar et VVH=1 | à 100 bar et VVH=0,5 | à 60 bar et VVH=1,5 | à 80 bar et VVH=1 | à 100 bar et VVH=0,5 |
| Couleur selon norme AFNOR T 60-104 | | $8^-$ | $1,5^-$ | $1^-$ | $1^-$ | $1^-$ | $1^{--}$ | 0,5 |
| Soufre en p.p.m dosé par fluorescence UV | | 4600 | 656 | 470 | 224 | 485 | 317 | 146 |
| Absorption UV selon norme ASTM 2008 : concentration 1 g/l dans isooctane, épaisseur cellule 1 cm | 290 N mètres (1) | 0,708 | 0,245 | 0,205 | 0,122 | 0,212 | 0,147 | 0,046 |
| | 265 N mètres | 1,54 | 0,480 | 0,410 | 0,245 | 0,425 | 0,309 | 0,124 |
| Concentration en aromatiques en moles /100 g de produit (dosage selon norme ASTM 2008) | Mono $X\,10^{-2}$ | 1,767 | 1,935 | 2,054 | 1,753 | 2,147 | 1,972 | 1,103 |
| | di $X\,10^{-4}$ | 36,20 | 11,40 | 8,70 | 5,15 | 10,70 | 7,20 | 3,50 |
| | Poly $X\,10^{-4}$ | 48,0 | 7,8 | 6,2 | 3,5 | 6,9 | 4,5 | 1,7 |

(1) N mètres : nanomètres ($10^{-9}$ m)

EP 0 246 160 B1

Ce tableau permet de constater que le catalyseur A est supérieur au catalyseur témoin T1.

Les produits obtenus avec le catalyseur A contiennent moins de soufre et moins d'aromatiques. Avec le catalyseur A, la spécification de couleur est plus facilement atteinte.

## EXEMPLE 3

Cet exemple concerne l'hydrotraitement d'une charge constituée par un distillat obtenu dans la distillation sous pression réduite d'un pétrole brut.

Cet hydrotraitement est effectué avant l'extraction des aromatiques du distillat par le furfural, en vue d'augmenter la production du raffinat obtenu par cette extraction et, donc, en aval, la production de base d'huiles lubrifiantes. L'hydrotraitement permet:

– d'une part, d'augmenter le pourcentage de composés saturés contenus dans la charge,

– d'autre part, d'hydrogéner les composés polyaromatiques et soufrés et de les transformer en composés monoaromatiques qui restent dans le raffinat.

Il faut savoir que ce sont surtout les composés polyaromatiques et soufrés qui sont extraits par le furfural.

On a utilisé pour cet hydrotraitement, d'une part, le catalyseur A de l'Exemple 1 et, d'autre part, le catalyseur commercial témoin T1 de l'Exemple 2.

Les essais sont effectués de la façon suivante : on utilise une unité pilote dans laquelle la charge et l'hydrogène circulent de façon descendante. Le réacteur contient 200 cm$_3$ de catalyseur. 50% du gaz est recyclé.

Avant les tests proprement dits, le catalyseur est présulfuré de la même façon que dans l'Exemple 2.

Les conditions opératoires sont les suivantes:

– température: 350°C

– vitesse volumique horaire: 1

– pression: 40 bar

– rapport hydrogène/charge: 150 normaux-litres/litre.

On recueille les effluents liquides dont on mesure l'indice de réfraction et dont on détermine la composition par spectrométrie de masse. Ces caractéristiques sont également déterminées sur la charge.

Les résultats figurent dans le Tableau IV ci-après:

EP 0 246 160 B1

## TABLEAU IV

| Caractéristique | Indice de Réfraction | Air X 10⁴ | Δ Hydro-carbures Saturés | Hydrocarbures aromatiques et soufrés | | | | | |
| --- | --- | --- | --- | --- | --- | --- | --- | --- | --- |
| | | | | Mono- | Di- | Tri- | Tétra- | Penta- | Soufrés |
| Effluent Essai avec Tl | 1,4912 | − 150 | + 1,56 | + 13,31 | + 4,62 | 0,66 | − 1,63 | 0,91 | − 16,29 |
| Effluent Essai avec A | 1,4895 | − 167 | + 1,90 | + 14,35 | + 4,55 | −1,09 | − 1,99 | −1,03 | − 16,69 |

△ : caractéristique de la charge − caractéristique de l'effluent

Indice de réfraction de la charge : 1,5062

On constate qu'avec le catalyseur A, on obtient, une augmentation plus importante en hydrocarbures saturés et en hydrocarbures monoaromatiques et donc une augmentation du raffinat après l'extraction au furfural.

## EXEMPLE 4

Cet exemple concerne l'hydrotraitement à l'aide du catalyseur A d'une charge obtenue par ultrafiltration d'une huile moteur usagée.

Dans l'exemple présent, les conditions opératoires de l'hydrotraitement sont une pression d'hydrogène de 75 bar, une température de 350°C, une vitesse spatiale de 0,3 $h^{-1}$. Les caractéristiques de la charge et de l'effluent obtenu figurent dans le tableau V ci-après:

## TABLEAU V

| Caractéristique | Charge obtenue par ultrafiltration d'une huile moteur usagée | Effluent obtenu par hydrotrai-tement sur le catalyseur A |
|---|---|---|
| Masse volumique à 15°C (selon norme AFNOR T 60-101) | 886 kg/m$^3$ | 860 kg/m$^3$ |
| Viscosité à 40°C en $10^{-6}$ m$^2$/s (selon norme AFNOR T 60- 100) | 59 | 52 |
| Couleur (selon nor-me AFNOR T 60-104) | > 8 | 3,5 |
| Soufre en % en poids (mesuré par dosage chimique) | 0,53 | 0,01 |
| Oxygène en % en poids (mesuré par dosage chimique) | 0,64 | 0,19 |
| Azote en ppm (mesu-ré par dosage chi-mique) | 700 | < 200 |
| Carbone conradson en % en poids (selon norme AFNOR T 60-116) | 0,23 | < 0,1 |
| Acidité TAN mgKOH/g (selon norme DIN 51-596) | 0,3 | 0,05 |
| PCB en ppm (chroma-tographie gazeuse) | 200 | < 20 |

Le catalyseur A mis en œuvre dans le procédé selon l'invention est donc très efficace. En outre, un avantage appréciable de ce catalyseur étant sa grande stabilité dans le temps, il est possible, dans cette application, d'atteindre des durées de cycles de 6 mois ou plus sans régénération du catalyseur. La lente désactivation est simplement compensée par une augmentation de la température, à un rythme qui n'excède pas 5°C par mois.

## Revendications

1. Procédé d'hydrotraitement catalytique d'hydrocarbures appartenant au groupe constitué par les paraffines, les distillats obtenus lors de la distillation sous pression réduite du pétrole brut et les huiles lubrifiantes usées ayant subi un traitement de clarification-démétallisation, ce procédé consistant à faire réagir lesdits hydrocarbures avec de l'hydrogène en présence d'un catalyseur, à une température comprise entre 300 et 450°C, sous une pression comprise entre 25 et 250 bar, avec un rapport volumique hydrogène/hydrocarbures compris entre 50 et 3000 normaux-litres/litre et avec une vitesse volumique horaire de la charge mesurée à l'état liquide comprise entre 0,1 et 5 v/v/h (volume de liquide passant par heure sur une unité de volume de catalyseur), le catalyseur comprenant:
    a) un support en alumine pouvant contenir jusqu'à 10% en poids de silice;
    b) sous forme libre ou combinée, de 0,5 à 30% en poids rapporté au poids total du catalyseur, de molybdène;
    c) sous forme libre ou combinée, de 0,5 à 10% en poids, rapporté au poids total du catalyseur, de nickel, ce catalyseur possédant en outre:
    – une surface spécifique comprise entre 100 et 350 m²/g et, de préférence, comprise entre 200 et 320 m²/g,
    – un volume poreux compris entre 0,6 et 2 cm³/g et, de préférence, compris entre 0,7 et 1,2 cm³/g, le volume poreux constitué par les pores de rayon supérieur à 300 Angströms ($10^{-10}$ m) ayant une valeur maximum de 0,20 cm³ par gramme,
    – un mode de distribution des rayons de pore (c'est-à-dire le point maximum de la courbe de distribution des rayons de pore) compris entre 30 et $70.10^{-8}$ cm,
    – une distribution du volume poreux telle que le catalyseur possède:
    * au plus 70% de son volume poreux constitué par des pores de rayons compris entre 0 et $100.10^{-8}$ cm,
    * au plus 35% de son volume poreux constitué par des pores de rayon compris entre 100 et $1000.10^{-8}$ cm,
    * au plus 15% de son volume poreux constitué par des pores de rayon supérieur à $1000.10^{-8}$ cm,
    – une densité apparente au plus égale à 0,65 g/cm³, ce procédé étant caractérisé en ce que le catalyseur utilisé, étudié par microsonde RAMAN, présente un spectre constitué par des raies ayant, pour les fréquences comprises entre 900 et 1020 cm⁻¹, la distribution suivante:
    * 40% au plus ont une fréquence comprise entre 900 et 930 cm⁻¹,
    * 30% au moins ont une fréquence comprise entre 930 et 955 cm⁻¹,
    * 40% au plus ont une fréquence comprise entre 955 et 1020 cm⁻¹,

2. Procédé selon la revendication 1, caractérisé en ce que le catalyseur contient de 10 à 25% en poids de molybdène et de 2,5 à 8% en poids de nickel.

## Patentansprüche

1. Verfahren zur katalytischen Hydrobehandlung von Kohlenwasserstoffen, nämlich Paraffinen, bei der Roherdöldestillation unter vermindertem Druck anfallenden Destillaten und Altschmierölen nach einer Reinigungs-/Entmetallisierungsbehandlung der letzteren, wobei diese Kohlenwasserstoffe mit Wasserstoff in Gegenwart eines Katalysators bei einer Temperatur zwischen 300 uned450°C, unter einem Druck zwischen 25 und 250 bar und mit einem Wasserstoff/Kohlenwasserstoffe-Volumenverhältnis zwischen 50 und 3000 Normliter/Liter sowie einer Volumengeschwindigkeit der Charge zwischen 0,1 und 5 v/v/h (auf den flüssigen Zustand bezogenes Volumen der Charge, welches über eine Katalysatorvolumeneinheit in einer Stunde hinwegströmt) umgesetzt werden und der Katalysator
    a) einen Träger aus Tonerde, gegebenenfalls mit einem Gehalt von bis zu 10 Gew.-% an Kieselerde,
    b) 0,5 bis 30 Gew.-%, bezogen auf das Katalysatorgesamtgewicht, freies oder gebundenes Molybdän sowie
    c) 0,5 bis 10 Gew.-%, bezogen auf das Katalysatorgesamtgewicht, freies oder gebundenes Nickel, und ferner
    eine spezifische Oberfläche zwischen 100 und 350 m²/g, vorzugsweise zwischen 200 und 320 m²/g,
    ein Porenvolumen zwischen 0,6 und 2 cm³/g, vorzugsweise zwischen 0,7 und 1,2 cm³/g, mit einem von Poren mit einem Radius größer als 300 Ångström ($10^{-10}$ m) gebildeten Volumen von höchstens 0,2 cm³/g,
    eine Porenradiusverteilung, deren Kurve ihr Maximum zwischen 30 und $70.10^{-8}$ cm hat,
    eine Porenvolumenverteilung, so daß höchstens 70% des Porenvolumens von Poren mit einem Radius zwischen 0 und $100.10^{-8}$ cm, höchstens 35% des Porenvolumens von Poren mit einem Radius zwischen 100 und $1000.10^{-8}$ cm und höchstens 15% des Porenvolumens von Poren mit einem Radius größer als 1000.10⁻⁸ cm gebildet sind, sowie
eine Raumwichte von höchste3ns 0,65 g/cm³
aufweist, dadurch gekennzeichnet, daß das mittels einer RAMAN-Mikrosonde festgestellte Spektrum des Katalysators aus Linien besteht, welche im Frequenzbereich zwischen 900 und 1020 cm⁻¹ folgendermaßen verteilt sind:
höchstens 40% haben eine Frequenz zwischen 900 und 930 cm⁻¹,
mindestens 30% haben eine Frequenz zwischen 930 und 955 cm⁻¹ und
höchstens 40% haben eine Frequenz zwischen 955 und 1020 cm⁻¹.

2. Verfahren nach Anspruch 1, dadurch gekennzeichnet, daß der Katalysator 10 bis 25 Gew.-% Molybdän und 2,5 bis 8 Gew.-% Nickel enthält.

## Claims

1. A process for the catalytic hydrotreatment of hydrocarbons belonging to the group comprising the paraffins, distillates obtained during the distillation under reduced pressure of crude petroleum and used lubricating oils which have undergone a clarifying/demetallisation treatment, said process comprising causing said hydrocarbons to react with hydrogen in the presence of a catalyst at a temperature of between 300 and 450°C at a pressure of between 25 and 250 bar, with a hydrogen/hydrocarbon volume ratio of between 50 and 3000 normal litres/litre and with a hourly spatial velocity of the charge, measured in the liquid state, of between 0.1 and 4 v/v/h (volume of liquid passing in one hour over a unit volume of catalyst), the catalyst comprising:

a) an alumina support which can contain up to 10% by weight of silica;

b) in a free of combined form, from 0.5 to 30% by weight of molybdenum, in relation to the total weight of catalyst;

c) in a free of combined form, from 0.5 to 10% by weight of nickel, in relation to the total weight of catalyst,

said catalyst also having:

– a specific surface of between 100 and 350 m²/g and, preferably, between 200 and 320 m²/g,

– a pore volume of between 0.6 and 2 cm³/g and, preferably, between 0.7 and 1.2 cm³/g, the pore volume constituted by pores having a radius greater than 300 Ångströms ($10^{-10}$ m) having a maximum value of 0.20 cm³ per gramme,

– a mode of pore radius distribution (i.e. the maximum point of the pore radius distribution curve) of between 30 and 70.10⁻⁸ cm,

– a pore volume distribution such that the catalyst has:

* at most 70% of its pore volume comprising pores having radii of between 0 and 100.10⁻⁸ cm,

* at most 35% of its pore volume comprising pores having radii of between 100 and 1000.10⁻⁸ cm,

* at most 15% of its pore volume comprising pores havig radii greater than 1000.10⁻⁸ cm,

– an apparent density at least equal to 0.65 g/cm³, said process being characterised in that the catalyst used, examined by RAMAN microprobe, has a spectrum comprising lines having, for frequencies of between 900 and 1020 cm⁻¹, the following distribution:

* 40% at most have a frequency of between 900 and 930 cm⁻¹,

* 30% at least have a frequency of between 930 and 955 cm⁻¹,

* 40% at most have a frequency of between 955 and 1020 cm⁻¹.

2. A process according to claim 1, characterised in that the catalyst contains from 10 to 25% by weight of molybdenum and from 2.5 to 8% by weight of nickel.

FIG.1

FIG.2

EP 0 246 160 B1